# EUROPEAN PATENT APPLICATION

(11) **EP 3 671 589 A1**
(43) Date of publication of application: **24.06.2020**
(21) Application number: 18382966.2
(22) Date of filing: 21.12.2018
(51) Int. Cl.: G06Q 10/06, G06Q 50/04

(54) **ESTIMATION OF COST AND TIME TO PRODUCE FOR ADDITIVE MANUFACTURING PROCESSES**

(71) Applicant: Atos Spain S.A., 28037 Madrid (ES)
(72) Inventor: Barberan, Miguel Angel, 28223 Madrid (ES); Garcia Albert, Enrique, 28050 Madrid (ES)
(74) Representative: Isern Patentes y Marcas S.L.

(57) **Abstract**

This invention relates to a method for determining an estimation of a production cost and/or a production time for manufacturing a product by an additive manufacturing process, comprising acquisition of a failure rate and inputting said failure rate into a cost and/or time calculation model for the estimation of said production cost and/or production time.

## Description

### FIELD OF THE INVENTION

The present invention relates to the field of additive manufacturing. In particular, it concerns the estimation of a cost and of a time for the additive manufacturing of a given product.

### BACKGROUND OF THE INVENTION

Additive manufacturing (AM) is a the set of any of various processes in which material is joined or solidified under computer control to create a three-dimensional object, with material being added together (such as liquid molecules or powder grains being fused together).

The manufactured objects can be of almost any shape or geometry and typically are produced using digital model data from a 3D model.

There are many different technologies, used in the 3D printing process, like for instance Fused Deposition Modeling (FDM), Selective Laser Singering (SLS), Selective Laser Melting (SLM), etc.

Some models exist to allow determining an estimation of the cost and/or of the time for producing a given product.

However, these models provide only theorical printing times and costs, and do not take into account the concrete issues which may happen during the manufacturing and cannot be captured by theorical models.

For instance, they do not take into account aspects like failure rates, distribution of costs in case of manufacturing several parts at a time or the optimal disposure of parts in the printing chamber.

The lack of information related to different aspects of additive manufacturing can be an obstacle to finish the tool successfully.

### SUMMARY OF THE INVENTION

The object of the present invention is to alleviate at least partly the above mentioned drawbacks.

This object is achieved with a method for determining an estimation of a production cost and/or a production time for manufacturing a product by an additive manufacturing process, comprising acquisition of a failure rate and inputting said failure rate into a cost and/or time calculation model for the estimation of said production cost and/or production time.

Preferred embodiments comprise one or more of the following features, which can be taken separately or together, either in partial combination or in full combination.
- said failure rate is determined on historical statistics for a context containing said product and said additive manufacturing process;
- said failure rate takes into account a real-time monitoring of said additive manufacturing process for refining said rate according to failures detected on the product under manufacturing;
- real building time is retrieved from a additive manufacturing machine and inputted into said cost and/or time calculation model for the estimation of said production cost and/or production time;

Another embodiments of the invention relates to a software product comprising instruction to realize the method as previously described when it is deployed on a data-processing platform.

Another embodiments of the invention relates to an apparatus for determining an estimation of a production cost and/or a production time for manufacturing a product by an additive manufacturing process, comprising means for acquiring a failure rate and for inputting said failure rate into a cost and/or time calculation model for the estimation of said production cost and/or production time.

Preferred embodiments comprise one or more of the following features, which can be taken separately or together, either in partial combination or in full combination.
- the apparatus is configured to determine said failure rate on historical statistics for a context containing said product and said additive manufacturing process;
- said failure rate takes into account a real-time monitoring of said additive manufacturing process for refining said rate according to failures detected on the product under manufacturing;
- The apparatus is further configured for retrieving real building time is retrieved from an additive manufacturing machine and inputted into said cost and/or time calculation model for the estimation of said production cost and/or production time.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows high-level functional architecture of a first aspect of the invention, according to some embodiments.
Fig. 2 shows high-level functional architecture of a second aspect of the invention, according to some embodiments.

### DETAILED DESCRIPTION OF THE INVENTION

In general, the present invention addresses problems comprising:
- Difficulty in selecting the most suitable technology due to the lack of knowledge in Additive Manufacturing (AM),
- Lack of manufacturing data to estimate the necessary materials and printing time
- Difficulty of cost estimation per product due to the wide range of variables involved in the manufacturing;
- Difficulty in taking the decision of whether products could be manufacturing by Additive Manufacturing or not. Most of manufacturing companies need some advices regarding this point.

The term "product" shall be understood here as anything resulting from the additive manufacturing process. Accordingly, a product may be a part or component of a final product. Several such products may be manufactured and then assembled to form this final product.

Additive manufacturing processes are very sensitive to many parameters. Variations in process parameters and material attributes can influence not only the microstructural features of the resulting product but may also lead to the generation of defects. The used materials may also be very sensitive to variations in the AM process, especially in steps like melting, submission to high-energy laser, etc.

Any feature seen in the microstructure of the manufactured product that deviates from the desired one can be considered as defect, or anomaly, depending on its impact on the final application (including potential customer requirements). In other words, defect, or anomaly, can be understood as a structural deviation from a desired uniform, isotropic, fully dense solid.

These physical phenomena are numerous and may interact with each other, making it so far difficult to develop mathematical models to correlate any defects in the manufactured product with the various technical parameters of the manufacturing process.

Any defects may cause the manufactured product (which can be a component or part of a final product) to be discarded, leading to additional costs (waste of materials and energy) and additional time.

However, these aspects are not captured by theorical models according to the state-of-the art, which can be used to determine the cost of the product and the time of the manufacturing of the product.

According to embodiments of the invention, a production cost and/or a production time for manufacturing a product by an additive manufacturing process is estimated by
- acquiring a failure rate and
- inputting said failure rate into a cost and/or time calculation model for the estimation of said production cost and/or production time.

According to embodiments, this failure rate is determined on historical statistics for a context containing said product and said additive manufacturing process.

For instance, a table can be maintained into a memory providing statistics for each type of products which is planned to be produced, and for the various AM process (including the type of AM machine, process technology like SLS, etc.)

According to embodiments, this failure rate takes into account a real-time monitoring of said additive manufacturing process for refining said rate according to failures detected on the product under manufacturing.

For instance, if it is detected some defects in the product under manufacturing, the method can comprise an estimation of whether this defect is acceptable or not, and if not, the impact of the discarding of this product, in terms of material waste (i.e. cost) and time.

This method and the apparatus (tool) configured to deploy such a method may be used in several ways. For instance, use cases comprise:
- prediction of cost per product,
- calculation of cost per product
- estimation of cost per product oriented to consultancy services.

Furthermore, aspects of the invention comprise
- CAD (Computer Aided Design) analyzer to check whether the model to build is correct or not. This feature allows a more accurate estimation of the amount of material to use;
- Business to technical data translator to convert consultant data (qualitative input data) to input values (e.g. numerical) for the calculator;
- Time calculator to estimate building times based on mathematical model
- Real time report. Cost calculator tool interfaces with the printing machine to obtain the real building time and calculate a more adjusted budget;
- Failure rate estimation to consider machine failure, for a better calculation of cost per product.
- Cost and time reporting (in different formats).

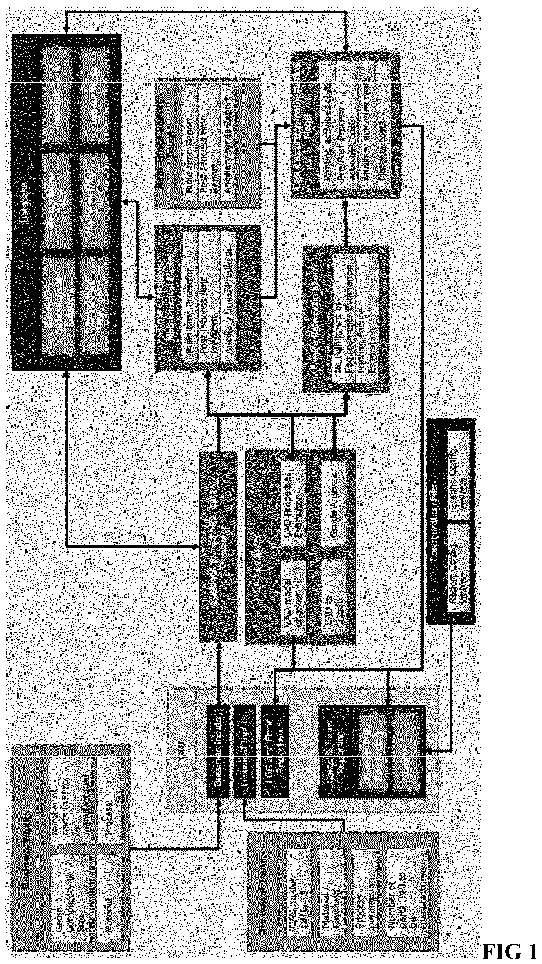

FIG. 1 further illustrates the various elements of the method and apparatus, according to embodiments.

Another aspect of the invention relates to a tool for the selection of the most suitable manufacturing technology in additive manufacturing. The features of such a tool for technology selection may comprise:
- initial requirements analysis to carry out a first filtering and viability analysis;
- implementation of MCDM (Multi Criteria Decision Making) methods for selection of the most suitable technology.
- Consistency checking to evaluate by means of a ratio the coherence of the selection criteria;
- connection to an external material and printing devices database to assist the technology selection and viability analysis.

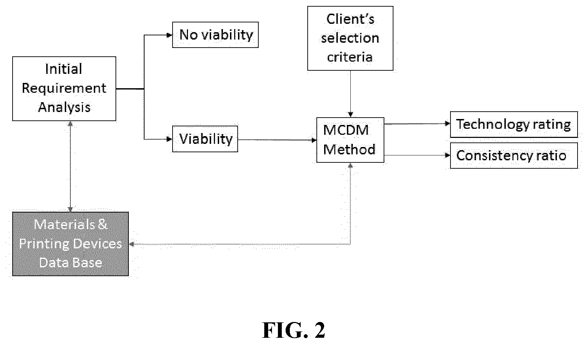

FIG. 2 further illustrates the various elements of a method and an apparatus related to this aspect of the invention, according to some embodiments.

The invention has been described with reference to preferred embodiments. However, many variations are possible within the scope of the invention.

The invention has been described with reference to preferred embodiments. However, many variations are possible within the scope of the invention.

## Claims

1. Method for determining an estimation of a production cost and/or a production time for manufacturing a product by an additive manufacturing process, comprising acquisition of a failure rate and inputting said failure rate into a cost and/or time calculation model for the estimation of said production cost and/or production time.

2. Method according to the previous claims, wherein said failure rate is determined on historical statistics for a context containing said product and said additive manufacturing process.

3. Method according to any of the previous claims, wherein said failure rate takes into account a real-time monitoring of said additive manufacturing process for refining said rate according to failures detected on the product under manufacturing.

4. Method according to any of the previous claims, wherein real building time is retrieved from a additive manufacturing machine and inputted into said cost and/or time calculation model for the estimation of said production cost and/or production time

5. Software product comprising instruction to realize the method according to any of the previous claims when it is deployed on a data-processing platform.

6. Apparatus for determining an estimation of a production cost and/or a production time for manufacturing a product by an additive manufacturing process, comprising means for acquiring a failure rate and for inputting said failure rate into a cost and/or time calculation model for the estimation of said production cost and/or production time.

7. Apparatus according to the previous claim, configured to determine said failure rate on historical statistics for a context containing said product and said additive manufacturing process.

8. Apparatus according to any of the claims 6 or 7, wherein said failure rate takes into account a real-time monitoring of said additive manufacturing process for refining said rate according to failures detected on the product under manufacturing.

9. Apparatus according to any of the previous claims, further configured for retrieving real building time is retrieved from an additive manufacturing machine and inputted into said cost and/or time calculation model for the estimation of said production cost and/or production time
